# EUROPÄISCHE PATENTANMELDUNG

(11) **EP 2 730 908 A2**
(43) Veröffentlichungstag der Anmeldung: **14.05.2014**
(21) Anmeldenummer: 13192640.4
(22) Anmeldetag: 13.11.2013
(51) Int. Cl.: G01M 17/10, B61K 9/00, G07C 5/00

(54) **Verfahren zur Ermittlung der Restlebensdauer einer Eisenbahn-Radsatzwelle mittels Prüfstandsversuchen**

(30) Priorität: 13.11.2012 DE 102012022117
(71) Anmelder: DB Systemtechnik GmbH, 32423 Minden (DE)
(72) Erfinder: Geburtig, Thorsten, 14774 Brandenburg (DE); Dr. Mädler, Katrin, 10405 Berlin (DE)
(74) Vertreter: Zinken-Sommer, Rainer

(57) **Zusammenfassung**

Die Erfindung betrifft ein Verfahren zur Ermittlung der Restlebensdauer einer Eisenbahn-Radsatzwelle mittels Prüfstandsversuchen.

Die Erfindung soll eine kürzere und gegenüber externen Einflüssen stabilere Versuchsdurchführung ermöglichen und damit einen verlässlicheren experimentellen Bezug für Berechnungen mit Rissfortschrittsmodellen herstellen.

Hierzu ist vorgesehen,
■ dass zu Beginn des Verfahrens mindestens eine Vorschädigung in Form einer künstlichen Kerbe in die Wellenoberfläche der Eisenbahn-Radsatzwelle zwischen Rad- und Getriebesitz eingebracht wird,
■ die Eisenbahn-Radsatzwelle während einer zeitlich ersten Phase mit einer konstanten Umlaufbiegebeanspruchung belastet wird, deren Amplitude zwischen dem Schwellenwert des Kerbs für Rissausbreitung und einem im realen Eisenbahnbetrieb auftretenden maximalen Grenzwert liegt, wobei die Länge eines sich im Grund der Kerbe bildenden Anrisses mittels eines zerstörungsfreien Prüfverfahrens überwacht wird,
■ bei Erreichen einer vordefinierbaren Länge des Anrisses im Kerbgrund die zeitlich erste Phase mit konstanter Umlaufbiegebeanspruchung beendet und die Eisenbahn-Radsatzwelle während einer hieran anschließenden zeitlich zweiten Phase mit einer veränderlichen Umlaufbiegebeanspruchung belastet wird, deren Amplitude durch eine intervallweise Abfolge von Lastwechsel-Teilfolgen verschiedener Laststufen in stochastischer Reihenfolge variiert wird, wobei die Länge des Risses im Kerbgrund mittels eines zerstörungsfreien Prüfverfahrens in Abhängigkeit von einer definierbaren Anzahl von Lastwechseln erfasst wird, und wobei in denjenigen Laststufen, deren Biegemomentamplituden unterhalb des Schwellenwert des Kerbs für Rissausbreitung liegen, nur ein reduzierter Anteil der Lastwechsel-Teilfolgen realisiert wird, solange die Längenzunahme des Risses am Kerbgrund bei ausgeführten Lastwechsel-Teilfolgen nicht signifikant von der Längenzunahme bei nichtausgeführten Lastwechsel-Teilfolgen abweicht.

## Beschreibung

Die Erfindung betrifft ein Verfahren zur Ermittlung der Restlebensdauer einer Eisenbahn-Radsatzwelle mittels Prüfstandsversuchen.

Die Ermittlung der Restlebensdauer von Radsatzwellen stellt nach wie vor eine große technische Herausforderung für die Betreiber von Schienenfahrzeugen dar. Bislang erfolgte die Vorhersage der Restlebensdauer von Radsatzwellen üblicherweise mittels rechnerischer Modelle. Verschiedene Einflussparameter wie z.B. Werkstoffparameter oder Korrosionsschäden (wie z.B. Passungsrost in den Welle-/ Nabe-Verbindungen) streuen sehr stark und sind deshalb nur schwer modellierbar. Deshalb liefern rechnerische Modelle meist nur ungenaue Ergebnisse, die mit den praktischen Erfahrungen oftmals nicht oder nur wenig übereinstimmen.

Aus dem Stand der Technik [Liedgens, Klaus: "Inspektionskonzept für Radsatzwellen bei der Hamburger Hochbahn AG" (EI-Eisenbahningenieur / März und April 2010)] ist ein Verfahren bekannt, bei dem die Restlaufleistung von Radsatzwellen nach Erreichen einer aus der betrieblichen Praxis empirisch ermittelten anrissfreien Grenzlaufleistung unter bruchmechanischen Gesichtspunkten der linear elastischen Bruchmechanik bestimmt wird. Mittels Prüfstandsversuchen wird dabei die Wachstumsgeschwindigkeit eines Risses in der Radsatzwelle zwischen einem ersten Stadium, bei dem ein Anriss erstmalig mittels Ultraschall detektierbar ist, und einem zweiten Stadium bei Erreichen einer kritischen Risstiefe, die zu unmittelbarem Bauteilversagen (Rest-Gewaltbruch) führen kann, ermittelt. Anhand dieser Wachstumsgeschwindigkeit werden sodann laufleistungsabhängige Inspektionsintervalle festgelegt.

In der Praxis hat sich jedoch herausgestellt, dass derartige Versuche fast immer sehr lange Versuchszeiten benötigen und nicht immer plausible Ergebnisse liefern.

Der Erfindung liegt daher die Aufgabe zugrunde, diesen bekannten Stand der Technik weiter zu entwickeln und ein Verfahren zur Ermittlung der Restlebensdauer einer Eisenbahn-Radsatzwelle mittels Prüfstandsversuchen bereitzustellen, das eine kürzere und gegenüber externen Einflüssen stabilere Versuchsdurchführung ermöglicht und damit einen verlässlicheren experimentellen Bezug für Berechnungen mit Rissfortschrittsmodellen herstellt.

Erfindungsgemäß wird diese Aufgabe in Verbindung mit dem Oberbegriff des Patentanspruches 1 dadurch gelöst,
■ dass zu Beginn des Verfahrens mindestens eine Vorschädigung in Form einer künstlichen Kerbe in die Wellenoberfläche der Eisenbahn-Radsatzwelle zwischen Rad- und Getriebesitz eingebracht wird,
■ die Eisenbahn-Radsatzwelle während einer zeitlich ersten Phase mit einer konstanten Umlaufbiegebeanspruchung belastet wird, deren Amplitude zwischen dem Schwellenwert des Kerbs für Rissausbreitung und einem im realen Eisenbahnbetrieb auftretenden maximalen Grenzwert liegt, wobei die Länge eines sich im Grund der Kerbe bildenden Anrisses mittels eines zerstörungsfreien Prüfverfahrens überwacht wird,
■ bei Erreichen einer vordefinierbaren Länge des Anrisses im Kerbgrund die zeitlich erste Phase mit konstanter Umlaufbiegebeanspruchung beendet und die Eisenbahn-Radsatzwelle während einer hieran anschließenden zeitlich zweiten Phase mit einer veränderlichen Umlaufbiegebeanspruchung belastet wird, deren Amplitude durch eine intervallweise Abfolge von Lastwechsel-Teilfolgen verschiedener Laststufen in stochastischer Reihenfolge variiert wird, wobei die Länge des Risses im Kerbgrund mittels eines zerstörungsfreien Prüfverfahrens in Abhängigkeit von einer definierbaren Anzahl von Lastwechseln erfasst wird, und wobei in denjenigen Laststufen, deren Biegemomentamplituden unterhalb des Schwellenwert des Kerbs für Rissausbreitung liegen, nur ein reduzierter Anteil der Lastwechsel-Teilfolgen realisiert wird, solange die Längenzunahme des Risses am Kerbgrund bei ausgeführten Lastwechsel-Teilfolgen nicht signifikant von der Längenzunahme bei nicht-ausgeführten Lastwechsel-Teilfolgen abweicht.

Auf diese Weise wird mittels der Durchmischung der Laststufen eine betriebsnähere Durchführung der Versuche, verbunden mit realistischeren Ergebnissen erreicht. Des Weiteren wird durch eine solche Verfahrensgestaltung die Versuchsdauer durch gezielte Omission (= Auslassen) von für den Schädigungsfortschritt irrelevanten Belastungszuständen während des zweiten Verfahrensschrittes wirksam verkürzt.

Es hat sich in diesem Zusammenhang als geeignet erwiesen, eine Ausgangsschädigung in Form eines halbelliptischen Kerbs mittels Funkenerodierens in die Oberfläche der Welle einzubringen. Diese wird dabei in Längsachse der Radsatzwelle in die Mulde zwischen Rad- und Getriebesitz eingebracht, bevorzugt mit einem Abstand von 11 mm zum (beim Prüfling unbelegten) Getriebesitz. Bei dieser Position tritt die größte Belastung der Radsatzwelle auf. Ebenso hat es sich als sinnvoll erwiesen, an dieser Position zwei in Bezug auf den Außenumfang der Radsatzwelle einander im Winkelabstand von 180° gegenüberliegende Kerbe auszuführen.

Die Prüflasten der zweiten zeitlichen Phase sind modellhaft den Belastungen des realen Eisenbahnbetriebes nachgebildet, beispielsweise basierend auf mittels Messfahrten über kritische Streckenabschnitte generierten Daten. Im Zuge dieser Modellierung werden die realen auf die Radsätze einwirkenden Belastungen bewertet, entsprechend ihrer Häufigkeit klassiert und zu einem nach Laststufen gegliederten Prüflastkollektiv aggregiert. Während sich die Biegeamplitude in der ersten zeitlichen Phase des erfindungsgemäßen Verfahrens stets oberhalb des Schwellenwert des Kerbs für Rissausbreitung (= sog. "Threshold-Wert") befindet, so weist das Prüflastkollektiv der zweiten zeitlichen Phase auch Lastfälle mit Biegeamplituden unterhalb des Threshold-Wertes auf.

Ein besonderer Vorteil der Erfindung liegt darin, dass während der zeitlich zweiten Phase in denjenigen Laststufen, deren Biegemomentamplituden unterhalb des Schwellenwert des Kerbs für Rissausbreitung liegen, nur ein verringerter Anteil der Lastwechsel-Teilfolgen realisiert wird, solange die Längenzunahme des Risses am Kerbgrund bei ausgeführten Lastwechsel-Teilfolgen nicht signifikant von der Längenzunahme bei nicht-ausgeführten Lastwechsel-Teilfolgen abweicht. Im Zuge der Entwicklungsarbeiten hat sich eine Reduzierung 90% bis 95% als durchaus praktikabel herausgestellt; d.h. es wird erfindungsgemäß innerhalb der betroffenen Laststufen nur ein Anteil von 5% bis 10% der Lastwechsel-Teilfolgen realisiert.

Da diese Laststufen den überwiegenden Teil des für die Versuchsdurchführung maßgeblichen Lastkollektivs darstellen, ergeben sich aus dieser Maßnahme ("O-mission") signifikante Versuchszeitverkürzungen um bis zu einem Viertel. Ein vollständiges Weglassen der Lastwechsel in diesen "schwächsten" Laststufen ist jedoch im Hinblick auf deren mögliche Einflüsse auf die aus der Bruchmechanik bekannten Reihenfolgeeffekte nicht sinnvoll.

Zu Kontrollzwecken werden während der zweiten Verfahrensphase in regelmäßigen Abständen zusätzlich auch solche Teilfolgen innerhalb der Laststufen, deren Biegeamplituden unterhalb des Schwellenwertes für Rissausbreitung liegen, realisiert, bei denen alle Lastwechsel (d.h. ohne "Omission") ausgeführt werden. Mittels der begleitenden zerstörungsfreien Prüfung wird das Rissausbreitungsverhalten dokumentiert und analysiert. Bei Erkennen signifikanter Abweichungen zwischen dem Rissausbreitungsverhalten ohne Omission und demjenigen mit Omission, werden für den restlichen Verfahrensablauf alle Teilfolgen mit jeweils allen Lastwechseln gefahren. Ein solches Kriterium kann beispielsweise in einem sprunghaften Anstieg der Rissfortschrittsrate zu sehen sein.

Das erfindungsgemäße Verfahren wird beendet, wenn auch die Biegemomentamplituden der schwächsten Laststufe in den Rissfortschritt eingreifen oder wenn durch signifikanten Anstieg der Rissfortschrittsgeschwindigkeit eine Risslänge erreicht ist, die einen Rest-Gewaltbruch mit hoher Wahrscheinlichkeit eintreten lässt.

Die Erfindung sieht insbesondere vor, dass in die Wellenoberfläche der Eisenbahn-Radsatzwelle zu Beginn des Verfahrens mindestens eine Vorschädigung eingebracht wird, deren Tiefen-/Längen-Verhältnis etwa 0,4 bis 0,5 beträgt. Auf diese Weise wird eine ausreichende Kerbschärfe gewährleistet. Mit einer Kerbtiefe von 1,2 mm bei gleichzeitiger Kerblänge von 2,0 mm wird damit eine Ausgangsbasis geschaffen, die an der unteren technisch möglichen Nachweisgrenze an sich üblicher Ultraschallsysteme liegt und somit den Start des Rissfortschrittsversuches aus der kleinstmöglichen mit herkömmlichen zerstörungsfreien Verfahren detektierbaren Anrisslänge ermöglicht.

Es hat sich des Weiteren als zweckmäßig herausgestellt, wenn die zeitlich erste Phase mit konstanter Umlaufbiegebeanspruchung bei Erreichen einer Anriss-Länge von vorzugsweise 0,5 mm bis 1 mm beendet wird.

Der Erfindungsgedanke wird in nachfolgenden Figuren verdeutlicht. Es zeigen:
- **Figur 1**: Anordnung der als Vorschädigung in die Radsatzwelle eingebrachten Kerbe, in Längsansicht parallel zur Wellen-Längsachse
- **Figur 2**: Anordnung der als Vorschädigung in die Radsatzwelle eingebrachten Kerben am Wellen-Umfang, in Schnittdarstellung lotrecht zur Wellen-Längsachse
- **Figur 3**: Dimensionierung eines Kerbs

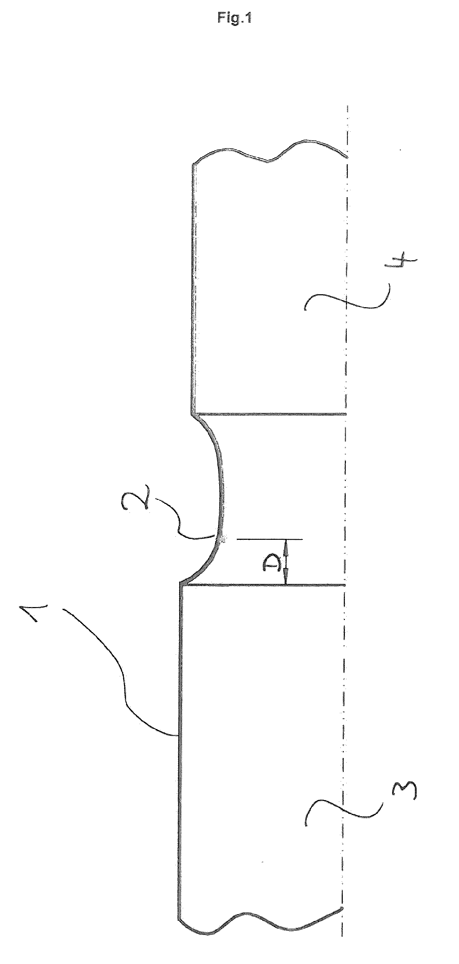

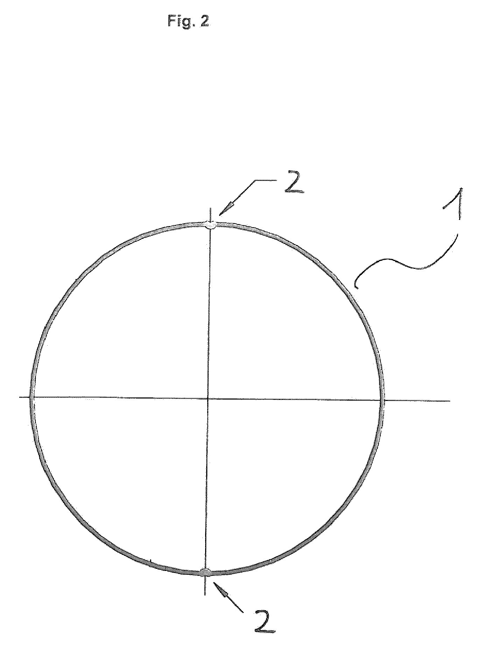

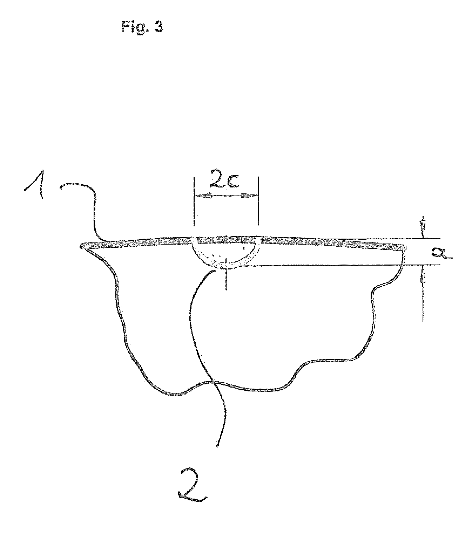

Die Radsatzwelle wird im Zuge des erfindungsgemäßen Verfahrens zunächst mittels Funkenerosion mit zwei sich gegenüberliegenden Startkerben in der Mulde zwischen Rad- und Getriebesitz versehen. In Figur 1 ist eine Anordnung der als Vorschädigung in die Radsatzwelle eingebrachten Kerbe, in Längsansicht parallel zur Wellen-Längsachse dargestellt. Figur 2 zeigt Anordnung der als Vorschädigung in die Radsatzwelle eingebrachten Kerben in Bezug auf den Wellen-Umfang, in Schnittdarstellung lotrecht zur Wellen-Längsachse. Aus Figur 3 ist die Dimensionierung eines Kerbs zu entnehmen. Die Kerb-Tiefe (a) weist einen Sollwert von 1,2mm, die Kerb-Länge (2c) einen Sollwert von 3,0 und die (in Figur 3 nicht sichtbare, weil lotrecht zur Darstellungsebene) Kerb-Breite einen Sollwert von 0,2 mm auf. Der Abstand des Kerbs zum unbelegten Getriebesitz beträgt 11 mm.

Während einer zeitlich ersten Phase mit einer konstanten Umlaufbiegebeanspruchung, der sog. "Rissinitialisierungsphase", wird die Radsatzwelle mit circa 1,28 Mio. Lastwechseln belastet. Davon entfällt circa ein Drittel auf die Kalibrierung, der Rest auf die eigentliche Anrissinitiierung unter einer konstanten Umlaufbiegebeanspruchung von 97 MPa in Messebene (gemessen an der Wellen-Oberfläche, in der Mulde zwischen Getriebe- und Radsitz, in einem Winkel von 90° gegen die Kerben versetzt). Bei Erreichen eines Risslängenzuwachses von 0,5 mm an beiden Kerben wird diese zeitlich erste Phase beendet.

Je geringer die Startkerben dimensioniert sind, desto geringer sind die Startintensitäten am Kerbgrund und desto höhere Lastwechselzahlen sind für die Rissinitialisierung erforderlich.

Bei der sich hieran anschließenden zeitlich zweiten Phase wird die Radsatzwelle mit einer veränderlichen Umlaufbiegebeanspruchung belastet, deren Amplitude durch eine intervallweise Abfolge von wechselnden Laststufen in stochastischer Reihenfolge variiert wird, wobei die Länge des Risses im Kerbgrund mittels eines zerstörungsfreien Prüfverfahrens in Abhängigkeit von einer definierbaren Anzahl von Lastwechseln erfasst wird, und wobei in denjenigen Laststufen, deren Biegemomentamplituden unterhalb des Schwellenwert des Kerbs für Rissausbreitung liegen, nur ein reduzierter Anteil der Lastwechsel-Teilfolgen realisiert wird, solange die Längenzunahme des Risses am Kerbgrund bei ausgeführten Lastwechsel-Teilfolgen nicht signifikant von der Längenzunahme bei nicht-ausgeführten Lastwechsel-Teilfolgen abweicht.

### Bezugszeichenliste:

- a: Kerb-Tiefe
- 2c: Kerb-Länge
- D: Abstand des Kerbs zum unbelegten Getriebesitz
- 1: Radsatzwelle
- 2: Kerb
- 3: Getriebe-Sitz
- 4: Rad-Sitz

## Patentansprüche

1. Verfahren zur Ermittlung der Restlebensdauer einer Eisenbahn-Radsatzwelle mittels Prüfstandsversuchen,
**dadurch gekennzeichnet, dass**
■ dass zu Beginn des Verfahrens mindestens eine Vorschädigung in Form einer künstlichen Kerbe in die Wellenoberfläche der Eisenbahn-Radsatzwelle zwischen Rad- und Getriebesitz eingebracht wird,
■ die Eisenbahn-Radsatzwelle während einer zeitlich ersten Phase mit einer konstanten Umlaufbiegebeanspruchung belastet wird, deren Amplitude zwischen dem Schwellenwert des Kerbs für Rissausbreitung und einem im realen Eisenbahnbetrieb auftretenden maximalen Grenzwert liegt, wobei die Länge eines sich im Grund der Kerbe bildenden Anrisses mittels eines zerstörungsfreien Prüfverfahrens überwacht wird,
■ bei Erreichen einer vordefinierbaren Länge des Anrisses im Kerbgrund die zeitlich erste Phase mit konstanter Umlaufbiegebeanspruchung beendet und die Eisenbahn-Radsatzwelle während einer hieran anschließenden zeitlich zweiten Phase mit einer veränderlichen Umlaufbiegebeanspruchung belastet wird, deren Amplitude durch eine intervallweise Abfolge von Lastwechsel-Teilfolgen verschiedener Laststufen in stochastischer Reihenfolge variiert wird, wobei die Länge des Risses im Kerbgrund mittels eines zerstörungsfreien Prüfverfahrens in Abhängigkeit von einer definierbaren Anzahl von Lastwechseln erfasst wird, und wobei in denjenigen Laststufen, deren Biegemomentamplituden unterhalb des Schwellenwert des Kerbs für Rissausbreitung liegen, nur ein reduzierter Anteil der Lastwechsel-Teilfolgen realisiert wird, solange die Längenzunahme des Risses am Kerbgrund bei ausgeführten Lastwechsel-Teilfolgen nicht signifikant von der Längenzunahme bei nicht-ausgeführten Lastwechsel-Teilfolgen abweicht.

2. Verfahren nach Patentanspruch 1 **dadurch gekennzeichnet, dass** in die Wellenoberfläche der Eisenbahn-Radsatzwelle zu Beginn des Verfahrens mindestens eine Vorschädigung eingebracht wird, deren Tiefen-/Längen-Verhältnis zwischen 0,4 bis 0,5 beträgt.

3. Verfahren nach einem der Patentansprüche 1 oder 2, **dadurch gekennzeichnet, dass** die zeitlich erste Phase mit konstanter Umlaufbiegebeanspruchung bei Erreichen einer Anriss-Länge von vorzugsweise 0,5 mm bis 1 mm beendet wird.
